# EUROPÄISCHE PATENTSCHRIFT

(11) **EP 1 455 172 B1**
(45) Veröffentlichungstag und Bekanntmachung des Hinweises auf die Patenterteilung: **04.10.2006**
(21) Anmeldenummer: 04004827.4
(22) Anmeldetag: 02.03.2004
(51) Int. Cl.: G01L 5/28, G01M 17/007

(54) **Bremsenprüfstand**
Brake test bench
Banc d'essai de freinage

(30) Priorität: 07.03.2003 DE 20303795 U
(43) Veröffentlichungstag der Anmeldung: 08.09.2004
(73) Patentinhaber: Otto Nussbaum GmbH & Co. KG, 77694 Kehl-Bodersweier (DE)
(72) Erfinder: Nussbaum, Hans Dipl.-Ing., 77694 Kehl-Sundheim (DE)
(74) Vertreter: Brommer, Hans Joachim

(56) Entgegenhaltungen:
- DE-A- 1 648 639
- DE-A- 3 701 254
- DE-C- 3 830 049

## Beschreibung

Die Erfindung betrifft ein Verfahren zur Bremsenprüfung für Fahrzeuge, insbesondere für Fahrzeuge mit Doppel- oder Mehrfachachsen, wobei die zu prüfenden Räder jeweils auf einem Rollenpaar stehen, das die Räder antreibt und beim anschließenden Prüfvorgang die Messung der Bremswirkung des jeweiligen Rades gestattet.

Bremsprüfstände sind in zahlreichen Ausführungsformen bekannt. Dabei wird das Fahrzeugrad, meist beide Räder einer Achse, deren Bremsen geprüft werden sollen, auf jeweils ein Rollenpaar gestellt, das von einem Motor angetrieben wird. Beim Betätigen der betreffenden Radbremse wird das erzeugte Drehmoment, zum Beispiel als Rückdrehmoment des das Rollenpaar antreibenden Motors gemessen und so die Bremswirkung des jeweiligen Rades erfasst.

Diese Bremsenprüfstände haben sich bei Personenwagen mit zwei Achsen bestens bewährt. Bei Nutzfahrzeugen treten jedoch bei der Bremsenprüfung mitunter ungenügende Bremswerte an den Rädern der Mehrfachachse auf. Nach Untersuchungen der Anmelderin liegt dies meist nicht an einer schlechten Funktion der Fahrzeugbremse, sondern an einer zu geringen Achslast. Ursächlich hierfür ist der Umstand, dass die im Bremsensprüfstand stehende Achse durch die danebenstehende Achse, deren Räder auf dem Werkstattboden stehen, eine gewisse Entlastung erfährt. Dadurch wird die Anpresskraft zwischen dem Rollenpaar des Prüfstandes und dem darauf stehenden Rad verringert, was sich negativ auf die Bremswirkung dieses Rades auswirkt.

Es ist daher bekannt, Zurrgurte über die im Bremsenprüfstand stehende Achse zu legen und diese Gurte hydraulisch nach unten zu ziehen, um die durch die Nachbarachse(n) bewirkte Entlastung zu kompensieren. Diese Vorgehensweise ist jedoch umständlich und zeitaufwendig.

Daneben ist es bekannt, die hintere Rolle des Rollenpaares auf einem höheren Niveau zu lagern, so dass die in das Rollenprisma eingesunkenen Räder oberhalb des Bodenniveaus stehen. Dadurch wird die Gewichtsentlastung durch die nebenstehende Achse etwas verringert. Reproduzierbare Verhältnisse ergeben sich dadurch aber nicht, weil die Entlastung der im Prüfstand stehenden Achse stark von der Fahrzeugfederung, insbesondere vom Federweg abhängig ist. Aus diesem Grund hat die erhöhte Anordnung der hinteren Rolle vor allem den Zweck, das Heraushüpfen der Räder aus dem Rollenprisma beim Bremsvorgang zu verhindern.

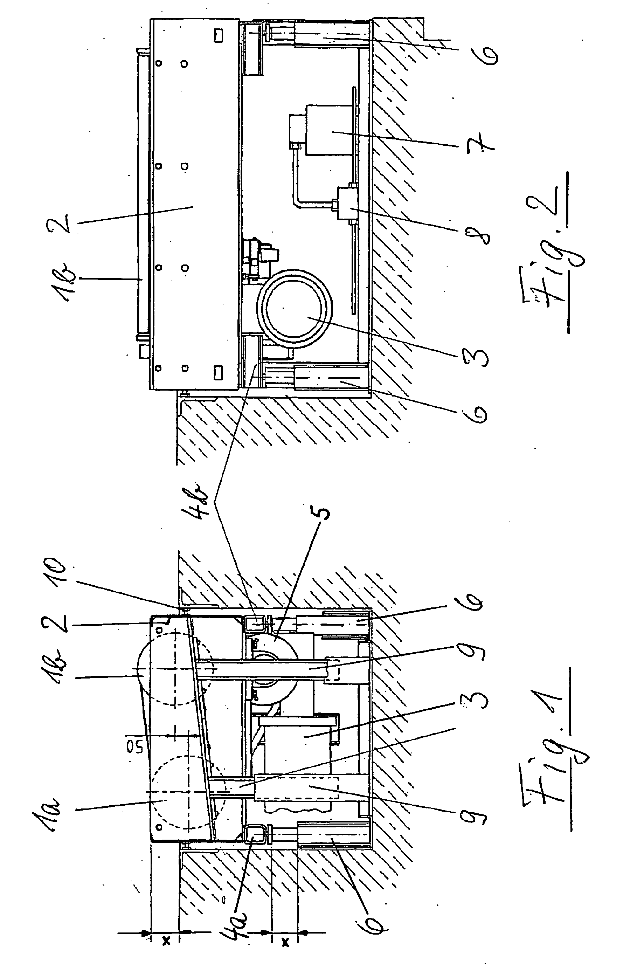

Zum allgemeinen Stand der Technik bei Fahrzeug-Prüfständen ist auf die DE 1 648 639 zu verweisen. Dort ist in den Figuren 3, 4, 7 und 8 ein Rahmen mit einem Rollenpaar gezeigt, wobei die Neigung dieses Rahmens verstellbar ist. Außerdem zeigt Figur 6 einen Prüfstand für Kettenfahrzeuge, bei dem eine Rolle nach oben gegen den ansteigenden vorderen Teil der Kette geschwenkt werden kann. Beide Maßnahmen haben den Zweck ein Herausklettern des Fahrzeuges aus dem Prüfstand zu verhindern.

Außerdem ist durch die DE 3 701 254 ein Bremsenprüfstand für Fahrzeuge mit Antiblockiersystem und/oder Antischlupfregelung bekannt geworden, bei dem alle vier Räder gleichzeitig auf Rollenpaare eines Prüfstandes gefahren werden. Die Rollenpaare sind dabei mittels einer Hubvorrichtung verstellbar. Für Fahrzeuge mit Doppelachsen ist dieser Prüfstand nicht geeignet.

Schließlich ist durch die DE 3 830 049 ein Kraftfahrzeug-Prüfstand bekannt geworden, der ein fahrbahnsimulierendes Band aufweist, das mittels eines Anregungszylinders in Schwingungen versetzt werden kann.

Hiervon ausgehend liegt die Aufgabe der vorliegenden Erfindung darin, die Bremsenprüfung dahingehend zu verbessern, dass bei Fahrzeugen mit Doppel- oder Mehrfachachsen der durch die neben dem Prüfstand stehende Achse bewirkte Entlastungseffekt eliminiert werden kann. Gleichzeitig soll das Prüfverfahren aber auch für zweiachsige Personenwagen geeignet sein, ohne dass die Gefahr besteht, dass nach oben ragende Teile des Prüfstandes Spoiler des Fahrzeuges oder heruntergezogene Seitenschweller beschädigen. Nicht zuletzt soll sich die erfindungsgemäße Bremsenprüfung durch kostengünstige und kompakte Bauweise auszeichnen.

Diese Aufgabe wird erfindungsgemäß dadurch gelöst, dass zur Eliminierung des Entlastungseffektes durch eine neben dem Prüfstand stehende Achse und zur Verstärkung der Anpresskraft zwischen Rad und Rollenpaar zumindest eine Rolle des Rollenpaares mittels einer Hubvorrichtung nach oben verfahren wird.

Hierdurch ergibt sich der Vorteil, dass das Fahrzeug problemlos auf das Rollenpaar in dessen abgesenkter Position gefahren werden kann, ohne dass tiefliegende Fahrzeugteile beschädigt werden. Handelt es sich um ein Fahrzeug mit Doppel- oder Mehrfachachse, so wird zumindest die eine Rolle des Rollenpaares allmählich soweit nach oben verfahren, bis die gewünschte Anpressung zwischen dem Rollenpaar und dem aufsitzenden Rad gewährleistet ist. Durch die Steuerung der Hubbewegung können vorgegebene Werte für die Anpresskraft reproduzierbar genau erreicht werden. Die erfindungsgemäße Bremsenprüfung ist somit gleichermaßen für zweiachsige Personenwagen wie auch für mehrachsige Nutzfahrzeuge geeignet.

Für die Durchführung des erfindungsgemäßen Verfahrens empfiehlt es sich, das komplette Rollenpaar hochzufahren, und zwar mitsamt seiner Lagerung, seinem Montagerahmen und vorzugsweise auch seinem Antrieb. Besonders günstig ist es dabei, wenn mit dem Rollenpaar auch die Messwertaufnehmer und die Wiegeeinrichtung verfahren werden. Dadurch kann die bisherige Konstruktion des Prüfstandes weitgehend beibehalten werden, weil er als komplette Einheit verfahren wird.

Grundsätzlich wäre es möglich, die Hubbewegung nach oben im Rahmen einer Schwenkbewegung vorzunehmen. Untersuchungen der Anmelderin haben aber ergeben, dass eine Hubbewegung in Vertikalrichtung wesentlich günstiger ist, insbesondere, wenn die Hubvorrichtung unterhalb des Rollenpaares angeordnet wird. Man erhält dadurch einen äußerst kompakten Aufbau, ohne dass die Grube, in der der Rollensatz im Werkstattboden eingelassen ist, nennenswert vergrößert werden braucht.

Zur Durchführung des Hubes empfiehlt es sich, zwei, vorzugsweise vier hydraulisch betätigte Zylinder-Kolben-Aggregate zu verwenden, die an den vier Ecken des Rollensatzes angeordnet sind.

Damit die Hubvorrichtung nicht den bei Nutzfahrzeugen erheblichen Bremskräften in horizontaler Richtung ausgesetzt wird, besteht eine zweckmäßige Weiterbildung der Erfindung darin, den Montagerahmen des Rollenpaares an zusätzlichen Vertikalführungen abzustützen. Dies kann etwa über Rollen erfolgen, die an vertikalen Schienen abrollen. Stattdessen kann die Vertikalführung aber auch aus teleskopartig verfahrbaren Profilschienen bestehen.

Weitere Merkmale und Vorteile des Anmeldungsgegenstandes ergeben sich aus der nachfolgenden Beschreibung eines Ausführungsbeispieles anhand der Zeichnung und aus der Zeichnung selbst. Dabei zeigt
- Fig. 1: einen vertikalen Querschnitt durch den Prüfstand eines Rades und
- Fig. 2: einen vertikalen Längsschnitt parallel zur Rollenachse.

Beide Figuren zeigen den Prüfstand in einer nach oben gefahrenen Position. Man erkennt oben die beiden parallel zueinander angeordneten Rollen 1a und 1b, wobei die in Fahrtrichtung hintere Rolle 1b etwa fünf Zentimeter höher angeordnet ist, um das Herausspringen der Räder aus dem Rollenprisma während des Bremsvorganges zu verhindern. Beide Rollen sind in einem rechteckigen, gehäuseartigen Rahmen 2 gelagert. Außerdem trägt dieser Rahmen an der Unterseite einen Antriebsmotor 3 mit Winkelgetriebe 5 für die beiden Rollen 1a und 1b. Nicht zuletzt ist der Rahmen 2 an beiden Seiten mit Wiegeeinrichtungen 4a und 4b verbunden, die auch als Messaufnehmer fungieren. Insoweit weist der Bremsenprüfstand im Wesentlichen den herkömmlichen Aufbau auf, so dass auf weitere Ausführungen betreffend den Antrieb und die Messung der Bremswirkung verzichtet werden kann.

Wesentlich ist nun, dass der Rahmen 2 mitsamt den eben beschriebenen Zubehörteilen vertikal verfahrbar gelagert ist. Zu diesem Zweck ruht er auf vier außenseitig angeordneten hydraulischen Zylinder-Kolben-Aggregaten 6, die an eine Hydraulikpumpe 7 mit Stromteilventil 8 angeschlossen sind und ein gezieltes Hochfahren des Rahmens 2 in unterschiedliche Positionen wie auch natürlich das Absenken desselben gestatten. Der maximale Hubweg liegt zwischen etwa sechs Zentimeter bis etwa fünfzehn Zentimeter, vorzugsweise zwischen etwa acht Zentimeter bis etwa zwölf Zentimeter.

Zur Aufnahme der erheblichen Horizontalkräfte, die beim Bremsvorgang auftreten, ist der Rahmen 2 an Vertikalführungen 9 gelagert. Sie bestehen im Ausführungsbeispiel aus zwei teleskopartig ineinanderfahrbaren Profilen, von denen das untere am Boden der Einbaugrube verankert ist, während das obere mit dem Rahmen 2 verbunden ist. Zusätzlich stützt sich der Rahmen 2 im oberen Bereich noch in Horizontalrichtung über verstellbare Abstandhalter 10, insbesondere Rollen, an den Grubenwänden ab, vorzugsweise an stabilen Metallleisten, die die obere Gruben-Einfassung bilden.

Die gewünschte Anpresskraft zwischen dem Rollenpaar und dem aufsitzenden Rad kann dadurch erzeugt werden, dass das Rollenpaar um eine vorgegebene Wegstrecke angehoben wird. In diesem Fall findet eine Regelung der Hubbewegung in Verbindung mit Wegsensoren statt.

Besonders günstig ist es aber, wenn die Wiegesensoren 4a, 4b für die Ermittlung der Anpresskraft zwischen Rollenpaar und aufsitzendem Rad herangezogen werden, weil sich die gewünschte Anpresskraft dann genauer einstellen lässt. Alternativ oder zusätzlich können auch Drucksensoren in die Hydraulikversorgung der Hubzylinder eingebaut werden, weil der gemessene Hydraulikdruck ein Maß für die Anpresskraft zwischen Rollenpaar und Rad ist.

In allen vorgenannten Fällen können die Sensoren an einen Regelkreis angeschlossen werden, der die Hubbewegung des Rollenpaares im Sinne der vorgegebenen Anpresskraft steuert.

## Patentansprüche

1. Verfahren zur Bremsenprüfung von Fahrzeugen mit Doppel- oder Mehrfachachsen, wobei die Räder der zu prüfenden Radachse jeweils auf einem Rollenpaar (1a,1b) stehen, das die Räder antreibt und beim anschließenden Prüfvorgang die Messung der Bremswirkung des jeweiligen Rades gestattet,
wobei
zur Eliminierung des Entlastungseffektes durch eine neben dem Prüfstand stehende Achse und zur Verstärkung der Anpresskraft zwischen Rad und Rollenpaar (1a, 1b) zumindest eine Rolle des Rollenpaares (1a,1b) mittels einer Hubvorrichtung (6) nach oben verfahren wird.

2. Verfahren nach Anspruch 1,
wobei
das komplette Rollenpaar (1a, 1 b) mitsamt seiner Lagerung, seinem Montagerahmen (2) und gegebenenfalls seinem Antrieb (3) nach oben verfahren wird.

3. Verfahren nach Anspruch 1,
wobei
das Rollenpaar (1a, 1b) mit seinen Messaufnehmern und gegebenenfalls seiner Wiegeeinrichtung (4a, 4b) nach oben verfahren wird.

4. Verfahren nach Anspruch 1,
wobei
die Hubvorrichtung (6) unterhalb des Rollenpaares (1a, 1b) angeordnet ist.

5. Verfahren nach Anspruch 1,
wobei
die Hubbewegung in Vertikalrichtung erfolgt.

6. Verfahren nach Anspruch 1,
wobei
die Hubvorrichtung (6) durch zwei, vorzugsweise vier hydraulische Zylinder-Kolben-Aggregate gebildet wird.

7. Verfahren nach Anspruch 1,
wobei
der Montagerahmen (2) des Rollenpaares (1a, 1 b) an zusätzlichen Vertikalführungen (9, 10) abgestützt wird.

8. Verfahren nach Anspruch 7,
wobei
die Vertikalführungen durch teleskopartig verfahrbare Profilschienen (9) und/oder Rollen gebildet sind.

9. Verfahren nach Anspruch 1,
wobei
die Steuerung der Hubbewegung mittels einer Wiegeeinrichtung (4a, 4b) erfolgt.

10. Verfahren nach Anspruch 1,
wobei
die Steuerung der Hubbewegung über einen Regelkreis erfolgt im Sinne einer vorgegebenen Anpresskraft zwischen Rollenpaar (1a, 1b) und aufsitzendem Rad.

## Claims

1. Method of testing the brakes of vehicles having twin or multiple axles, the wheels of the wheel axle to be tested each standing on a roller pair (1a, 1b) which drives the wheels and, in a subsequent testing operation, enables the braking action of the wheel in question to be measured,
wherein to eliminate the load-reducing effect caused by an axle standing beside the test stand and to increase the contact pressure between wheel and roller pair (1a, 1 b), at least one roller of the roller pair (1a, 1b) is moved upwards by means of a lifting device (6).

2. Method according to claim 1,
wherein the complete roller pair (1 a, 1 b) is moved upwards together with its bearings, its mounting frame (2) and, optionally, its drive means (3).

3. Method according to claim 1,
wherein the roller pair (1a, 1 b) is moved upwards with its sensors and, optionally, its weighing device (4a, 4b).

4. Method according to claim 1,
wherein the lifting device (6) is arranged beneath the roller pair (1a, 1 b).

5. Method according to claim 1,
wherein the lifting movement is effected in the vertical direction.

6. Method according to claim 1,
wherein the lifting device (6) is formed by two, preferably four, hydraulic cylinder-piston assemblies.

7. Method according to claim 1,
wherein the mounting frame (2) of the roller pair (1a, 1 b) is supported on additional vertical guides (9, 10).

8. Method according to claim 7,
wherein the vertical guides are formed by telescopic profile rails (9) and/or rollers.

9. Method according to claim 1,
wherein the control of the lifting movement is effected by means of a weighing device (4a, 4b).

10. Method according to claim 1,
wherein the control of the lifting movement is effected by means of a control circuit in accordance with a predetermined contact pressure between the roller pair (1a, 1b) and the wheel located thereon.

## Revendications

1. Procédé pour le contrôle de freins de véhicules à essieux doubles ou multiples, les roues de l'essieu à contrôler étant respectivement placées sur une paire de rouleaux (1a, 1b), qui entraîne les roues et permet de mesurer l'effet de freinage de la roue concernée lors de la procédure de contrôle qui suit,
au moins un rouleau de la paire de rouleaux (1a, 1b) étant déplacé vers le haut au moyen d'un dispositif de levage (6), afin d'éliminer l'effet de décharge dû à un essieu placé à côté du banc d'essai et de renforcer la force de pression entre la roue et la paire de rouleaux (1a, 1b).

2. Procédé selon la revendication 1,
la paire de rouleaux complète (1a, 1b) étant déplacée vers le haut avec son logement, son cadre de montage (2) et, le cas échéant, son entraînement (3)

3. Procédé selon la revendication 1,
la paire de rouleaux (1a, 1b) étant déplacée vers le haut avec ses capteurs de mesure et, le cas échéant, son dispositif de pesée (4a, 4b).

4. Procédé selon la revendication 1,
le dispositif de levage (6) étant disposé en dessous de la paire de rouleaux (1a, 1b).

5. Procédé selon la revendication 1,
le mouvement de levage ayant lieu dans le sens vertical.

6. Procédé selon la revendication 1,
le dispositif de levage (6) étant formé de deux, de préférence de quatre groupes de cylindres et de pistons hydrauliques.

7. Procédé selon la revendication 1,
le cadre de montage (2) de la paire de rouleaux (1a, 1b) étant étayé par des guidages verticaux supplémentaires (9, 10).

8. Procédé selon la revendication 7,
les guidages verticaux étant formés de rails profilés (9) télescopiques et/ou de rouleaux.

9. Procédé selon la revendication 1,
la commande du mouvement de levage étant assurée au moyen d'un dispositif de pesée (4a, 4b).

10. Procédé selon la revendication 1,
la commande du mouvement de levage étant assurée via un circuit de réglage au sens d'une force de pression prescrite entre la paire de rouleaux (1a, 1b) et la roue reposant dessus.
